# FASCICULE DE BREVET EUROPEEN

(11) **EP 4 163 225 B1**
(45) Date de publication et mention de la délivrance du brevet: **25.12.2024**
(21) Numéro de dépôt: 22197495.9
(22) Date de dépôt: 23.09.2022
(51) Int. Cl.: B65D 88/76, B65D 90/10, B65D 90/08, C02F 1/00, E03F 1/00, E03B 3/03, E03F 5/02, E03F 5/10, C02F 3/12, E03F 5/18

(54) **CUVE COMPRENANT UNE RÉHAUSSE AVEC UNE AMORCE DE RUPTURE**
BEHÄLTER MIT EINEM AUFSATZ MIT EINEM BRECHEINSATZ
VESSEL COMPRISING A ROAD WITH A PREDETERMINED BREAKING POINT

(30) Priorité: 06.10.2021 FR 2110561
(43) Date de publication de la demande: 12.04.2023
(73) Titulaire: Innoclair, 56700 Kervignac (FR); Kerpont, 56600 Lanester (FR)
(72) Inventeur: RAULT, Hugues, 56700 Kervignac (FR); BOUTRON, Romain, 56700 Kervignac (FR)
(74) Mandataire: Lequien, Philippe

(56) Documents cités:
- DE-A1- 1 811 753
- FR-A1- 2 699 980
- FR-A1- 3 054 210
- US-A1- 2010 178 106
- US-B1- 7 537 413

## Description

Le domaine de l'invention est celui de la conception et de la fabrication des équipements de collecte et/ou de traitement des eaux usées.

Plus précisément, l'invention concerne en particulier, mais non exclusivement, une cuve de station d'épuration individuelle, du type intégrant un bassin d'aération et un bassin de clarification, ainsi qu'une cuve de collecte d'eaux usées, dont des eaux de ruissèlements.

Dans le cadre de l'assainissement non collectif, on distingue les habitations reliées au réseau de collecte de leur commune et celles qui ne le sont pas. Jusqu'à récemment, les habitations non reliées au réseau de collecte étaient équipées généralement, voire dans le meilleur des cas, d'une fosse septique pour le traitement des eaux usées domestiques (hors eaux pluviales) associée à un bac à sable filtrant.

L'évolution des normes et réglementations imposent aux habitations non reliées au réseau de collecte de leur commune de disposer d'un système d'assainissement individuel, visant à renvoyer au milieu naturel des eaux traitées de qualité satisfaisante prédéterminée.

Dans ce contexte, une solution pour les particuliers non reliés au réseau de collecte de leur commune consiste notamment à recourir à l'installation d'une microstation d'épuration.

Une microstation d'épuration peut se définir comme une solution de traitement des eaux usées domestiques, fonctionnant à échelle réduite selon le même principe qu'une station d'épuration collective de grandes villes, ceci par la mise en oeuvre d'un procédé dit « à boue activée » ou « à culture fixée ».

Schématiquement, les microstations comprennent au moins une cuve constituant des réservoirs d'eau contenant un ensemble de mécanismes (compresseur d'air, pompe, tableau électrique...), et sont généralement destinées à être enterrées.

Classiquement, les microstations d'épuration sont conçues pour réaliser les phases de traitement suivantes :
- l'aération ;
- la décantation ;
- la clarification à l'issue de laquelle de l'eau épurée est extraite de la microstation pour être en général dispersée dans le sol.

Dans le cadre par exemple du traitement des eaux de pluie ou des eaux usées, il est classique d'avoir recours à des stations de relevage destinées à relever le niveau d'eaux collectées, c'est-à-dire de collecter des eaux et de les évacuer plus haut que le lieu d'où elles proviennent.

Les cuves de station de relevage présentent classiquement un fond et une paroi périphérique qui s'étend depuis le fond jusqu'à une ouverture, comme celle décrit dans le document DE 18 11 753 A1.

De telles cuves prennent par exemple une forme cylindrique de révolution.

Une cuve de station de relevage peut être construite directement sur son site d'installation, et est par exemple maçonnée.

Une cuve de station de relevage peut également être préfabriquée. C'est-à-dire que cette cuve est fabriquée en usine et conçue pour pouvoir être déplacée sur le site de son installation. Cette méthode de fabrication et d'installation se révèle plus économique et rapide à réaliser.

Les cuves des microstations peuvent également être préfabriquées.

L'installation d'une cuve préfabriquée, en plastique (par exemple en polyéthylène ou en résine de polyester armée de fibres de verre), de microstation ou d'une station de relevage, implique le creusement d'une fosse au moins aux dimensions de la cuve, puis l'insertion de la cuve dans la fosse. Ensuite, un matériau de comblement est déversé autour de la cuve pour la caler à l'intérieur de la fosse.

Des réhausses de forme cylindrique, par exemple cylindrique de révolution, peuvent équiper ces cuves et sont destinées à former des regards d'accès aux cuves, refermés par des tampons.

Ces réhausses peuvent être indépendantes des cuves, et nécessiter d'être couplées et ajustées sur les cuves.

Ces réhausses peuvent également être directement intégrées aux cuves.

L'évolution des réglementations impose un positionnement en hauteur précis du regard par rapport au niveau du sol fini.

Pour les réhausses directement intégrées aux cuves, l'ajustement de la hauteur du bord supérieur de la réhausse se révèle problématique.

En effet, les cuves en plastique présentent classiquement une paroi pouvant atteindre une épaisseur d'environ 1 centimètre et la découpe de ce matériau est malaisée.

Il a notamment été constaté qu'un recours à une scie sabre pour découper la réhausse à une hauteur précise entraîne une découpe produisant de nombreuses particules de plastique. Ces particules de plastique tombent alors à l'intérieur de la cuve et un nettoyage de la cuve doit alors être impérativement réalisé préalablement à sa mise en service, ce qui peut être particulièrement long et fastidieux.

Par rapport aux réhausses rapportées, par exemple vissées sur la cuve pour adapter la hauteur du bord supérieur de la réhausse à la hauteur du sol fini, un bord supérieur obtenu par une découpe à la scie sabre est peu qualitatif. Cet aspect peu qualitatif résulte notamment de la présence de nombreuses bavures, le bord supérieur d'une réhausse rapportée étant quant à lui lisse et régulier.

L'invention a notamment pour objectif de répondre à ce problème.

Plus précisément, l'invention a pour objectif de proposer une cuve en matière plastique, pour la collecte et/ou le traitement d'eaux usées, qui intègre une réhausse présentant la capacité d'être aisément adaptée en hauteur.

L'invention a également pour objectif de fournir une telle cuve dont l'opération de mise à la bonne hauteur de la réhausse permet d'obtenir un bord supérieur de la réhausse qui soit plus qualitatif que ce que permet l'art antérieur quand une scie sabre est utilisée.

L'invention a encore pour objet de fournir une telle cuve dont l'opération de mise à la bonne hauteur de la réhausse n'entraîne pas d'opération d'entretien par la suite, ou minimise ces opérations.

Ces objectifs, ainsi que d'autres qui apparaitront par la suite, sont atteints grâce à l'invention qui a pour objet une cuve pour la collecte et/ou le traitement d'eaux usées destinée à être enterrée, la cuve étant en matériau plastique et comprenant :
- des parois délimitant un volume interne dont une paroi supérieure ;
- une réhausse comprenant une paroi périphérique s'étendant en hauteur depuis la paroi supérieure jusqu'à une ouverture, la réhausse étant destinée à former un regard,
caractérisée en ce que la paroi périphérique de la réhausse présente une amorce de rupture formée par un sillon ménagé dans l'épaisseur de la paroi périphérique, le sillon s'étendant sur l'une des surfaces de la paroi périphérique à une hauteur prédéterminée de la réhausse depuis la paroi supérieure, le sillon présentant un fond avec une section transversale en forme en V.

La cuve selon l'invention intègre une réhausse qui présente la capacité à pouvoir être ajustée en hauteur aisément tout en produisant un bord supérieur ajusté qui est qualitatif par rapport aux ajustements selon l'art antérieur ayant recours à une scie sabre.

La hauteur à laquelle est située le sillon définit la hauteur de la réhausse ajustée.

La réhausse de la cuve selon l'invention présente ainsi, le long de sa hauteur, deux parties dont une partie inférieure située en dessous du sillon et une partie supérieure située au-dessus du sillon.

Dans le cas où lors d'une installation de la cuve selon l'invention, l'installateur souhaite ajuster la hauteur de la réhausse, alors il lui suffit de séparer la partie supérieure de la partie inférieure. Cette séparation est possible du fait que le sillon forme une amorce de rupture rendant sécable la partie supérieure de la partie inférieure.

La rupture de la partie supérieure par rapport à la partie inférieure peut être produite par exemple par le biais d'une traction ad hoc de la partie supérieure.

La rupture de l'amorce de rupture peut également être créée par un choc adéquat.

En conséquence, l'ajustement de la hauteur de la réhausse se révèle être particulièrement simple à mettre en oeuvre vis-à-vis des techniques mettant en oeuvre, par exemple, une scie sabre et nécessitant de réaliser une découpe sur tout le pourtour de la réhausse.

De plus, le sillon prédétermine la forme de la rupture et ainsi la forme du bord supérieur de la réhausse ajusté. En conséquence, cette forme du bord supérieur ajusté n'est pas dépendante de la manière avec laquelle est manipulé un outil pour réaliser une découpe.

Grâce au fait qu'une rupture permet de produire un bord supérieur ajusté pour la réhausse, alors il n'est pas produit de particules résultant d'un sciage de la matière de la paroi périphérique.

En conséquence, grâce à la cuve selon l'invention, il est possible de mettre à la bonne hauteur la réhausse sans entraîner d'opération d'entretien ou en minimisant ces opérations d'entretien ultérieures.

La diminution de l'épaisseur de la paroi, résultant par la présence du sillon qui est ménagé dans l'épaisseur de la paroi périphérique, et le fait que le fond du sillon présente une forme en V, permettent de réaliser une rupture avec un bord net, sans bavure. Cela est particulièrement avantageux et l'aspect du bord supérieur ajusté de la réhausse est qualitatif.

Selon un mode de réalisation préféré, selon un plan transversal à la paroi périphérique, la paroi périphérique présente au-dessus du sillon un bourrelet formant une zone de frappe pour entraîner une rupture de la paroi périphérique par l'amorce de rupture.

Grâce à ce mode de réalisation, la rupture de la réhausse au niveau du sillon est réalisée par le biais d'une ou plusieurs frappes réalisées sur la ou les zones de frappe.

Par exemple, il est possible d'utiliser un maillet pour taper sur la zone de frappe située au-dessus du sillon, d'un premier côté de la cuve, produisant de la sorte une rupture de l'ensemble du sillon de ce premier côté de la cuve.

Par la suite, une ou plusieurs frappes du bourrelet situées du deuxième côté de la cuve, opposé au premier côté, permettent de finir de rompre la paroi périphérique au niveau du sillon de ce deuxième côté.

Avantageusement, la paroi périphérique de la réhausse présente une corrugation annulaire faisant saillie à l'intérieur de la réhausse, le sillon étant situé dans le creux de la corrugation, et un pan supérieur de la corrugation annulaire formant le bourrelet.

Cette corrugation annulaire permet de guider les forces s'exerçant sur la paroi périphérique en direction du sillon lors d'une frappe de la zone de frappe formée par la partie supérieure de la corrugation annulaire qui constitue un bourrelet.

Selon une caractéristique avantageuse, la forme en V du fond du sillon définit un angle aigu, préférentiellement la forme en V s'inscrivant dans un triangle avec :
- une base de 4 à 8 mm, et avantageusement de 6 mm ;
- une hauteur de 15 mm à 30 mm, avantageusement de 20 mm.

Il a été constaté que de telles dimensions, et plus particulièrement les dimensions qualifiées d'avantageuses, permettent de maximiser l'effet technique de l'amorce de rupture.

Selon une conception préférée, au niveau du fond du sillon, la paroi périphérique présente une épaisseur égale à environ 3/10^{ièmes} de l'épaisseur moyenne de la paroi périphérique.

Cette conception participe à maximiser l'effet de l'amorce de rupture.

Avantageusement, la paroi périphérique présente une épaisseur de 10 mm autour du sillon et une épaisseur de 3 mm au niveau du fond du sillon.

Selon un mode de réalisation préféré, la cuve est rotomoulée.

Le sillon qui présente un fond avec une section transversale en forme de V entraîne ainsi naturellement une diminution de l'épaisseur de la paroi périphérique à l'extrémité du sillon, dans la continuité de son fond. Cette diminution en épaisseur favorise ainsi une rupture propre et nette suite à la réalisation d'une action apte à entraîner la rupture au niveau du sillon.

Préférentiellement, le sillon présente une section transversale en forme en V.

De cette manière, la rupture provoquée par le sillon est optimisée.

Selon une première variante, le sillon est ininterrompu.

Grâce à un sillon ininterrompu, il n'est pas nécessaire de réaliser d'autre action que celle nécessaire pour entraîner la rupture des parties de la réhausse séparées par le sillon.

Selon une seconde variante, le sillon est interrompu par au moins un renfort à découper.

Selon cette variante, il est nécessaire de réaliser également une découpe du ou des renforts pour pouvoir séparer les deux parties situées de part et d'autre du sillon.

La présence de ce ou ces renforts permet d'éviter une séparation non désirée de la partie inférieure au sillon de la partie supérieure au sillon.

L'invention a également pour objet un moule de cuve pour la collecte et/ou le traitement d'eaux usées destinée à être enterrée, le moule présentant une empreinte d'une cuve telle que définie précédemment.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en vue de côté d'une cuve selon l'invention ;
- la figure 2 est une représentation schématique en vue latérale d'une réhausse d'une cuve selon un premier mode de réalisation de l'invention ;
- la figure 3 est une représentation schématique, du premier mode de réalisation, en vue latérale centrée sur une partie de corrugation annulaire présentée par une paroi périphérique de la réhausse, la corrugation annulaire présentant un sillon formant une amorce de rupture de la réhausse ;

- la figure 4 est une représentation schématique de détail illustrant l'épaisseur de la paroi périphérique relative au détail illustré par la figure 3 ;
- la figure 5 est une représentation schématique d'un autre mode de réalisation dans lequel le sillon est centré dans une corrugation annulaire de la réhausse ;
- la figure 6 est une représentation schématique en vue du dessus de la forme du sillon, le sillon étant, selon ce mode de réalisation, interrompu par des renforts.

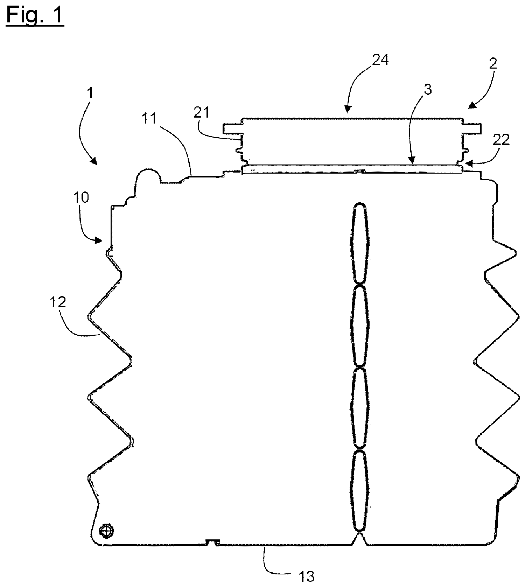

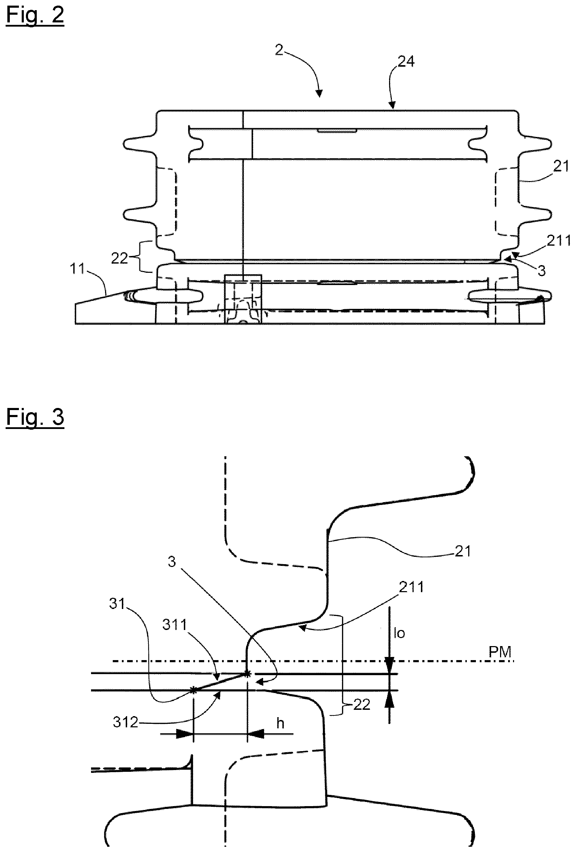

En référence aux figures 1 et 2, une cuve 1 pour la collecte et/ou le traitement d'eaux usées est représentée.

La cuve 1 représentée est plus particulièrement une cuve de microstation.

Cette cuve 1 est destinée à être enterrée.

La cuve 1 est réalisée en un matériau plastique.

Ce matériau plastique est par exemple du polyéthylène, ou bien de la résine de polyester armée de fibres de verre.

La cuve 1 est par exemple obtenue par rotomoulage.

L'invention concerne aussi un moule présentant une empreinte de la cuve 1. Ce moule est adapté à une fabrication par rotomoulage.

La cuve 1 comprend une réhausse 2.

Plus précisément, la cuve 1 comprend un corps principal 10 délimitant un volume interne surmonté par la réhausse 2.

La cuve 1 est monobloc.

Avantageusement, la réhausse 2 est venue de matière avec le corps principal 10 de la cuve 1.

Plus précisément, la cuve 1 comprend des parois qui délimitent le volume interne.

Les parois sont composées notamment d'un fond 13, de parois latérales 12, ainsi que d'une paroi supérieure 11.

Les parois latérales 12 s'étendent depuis le fond 13 jusqu'à la paroi supérieure 11.

La paroi supérieure 11 présente un passage.

Ce passage, présenté par la paroi supérieure 11, est bordé et prolongé par la réhausse 2.

La réhausse 2 comprend quant à elle une paroi périphérique 21 qui s'étend en hauteur depuis la paroi supérieure 11 jusqu'à une ouverture 24.

La réhausse 2 est destinée à former un regard.

La paroi périphérique 21 de la réhausse 2 adopte notamment une forme de cylindre.

L'ouverture 24, située à une extrémité supérieure de la réhausse 2, est destinée à être refermée avec un tampon.

Selon le principe de l'invention, la réhausse 2 de la cuve 1 peut être séparée en deux à une hauteur prédéterminée pour réduire sa hauteur.

A cet effet, et en référence aux figures 1 à 6, la paroi périphérique 21 de la réhausse 2 présente une amorce de rupture.

En effet, la paroi périphérique 21 comprend un sillon 3 qui est ménagé dans l'épaisseur de la paroi périphérique 21. Ce sillon 3 forme ainsi l'amorce de rupture.

En d'autres termes, l'amorce de rupture correspond à une zone de fragilité de la paroi périphérique 21.

Le sillon 3 s'étend sur l'une des surfaces de la paroi périphérique à une hauteur prédéterminée de la réhausse 2 depuis la paroi supérieure 11.

Selon le présent mode de réalisation, le sillon 3 s'étend sur la surface externe de la paroi périphérique 21, cette surface externe étant opposée à la surface interne qui est orientée vers l'intérieur de la cuve 1, par rapport à la paroi périphérique 21.

En s'étendant à une hauteur prédéterminée, le sillon 3 entoure la réhausse 2.

En d'autres termes, le sillon 3 s'étend sur l'ensemble de la surface externe de la paroi périphérique 21 à la hauteur prédéterminée.

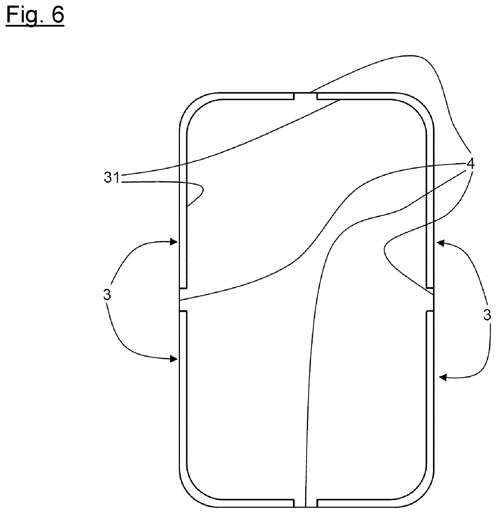

En référence à la figure 6, la forme adoptée par le sillon 3 est représentée, vue de dessus.

Tel que cela peut être observé selon le mode de réalisation illustré par la figure 6, le sillon 3 est interrompu par des renforts 4 à découper.

En effet, la figure 6 illustre la profondeur des sillons 3.

Tel que cela est visible, quatre renforts 4 interrompent le sillon 3, ces renforts 4 étant destinés à être découpés.

Selon un mode de réalisation non représenté, le sillon 3 est ininterrompu. En d'autres termes, aucun renfort n'interrompt le sillon 3.

Selon ce mode de réalisation non représenté, le sillon 3 parcourt l'ensemble du pourtour de la paroi périphérique 21 à la hauteur prédéterminée.

Tel que cela est visible par les figures 3, 4 et 5, le sillon 3 présente un fond 31 avec une section transversale en forme de V.

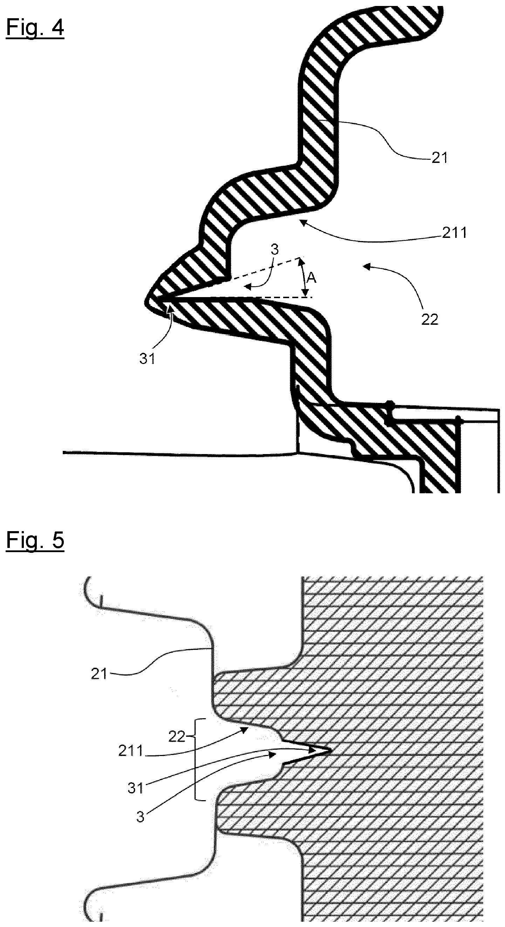

Cette section transversale en forme de V définit notamment un angle aigu A, tel que cela est notamment représenté sur la figure 4. Cet angle aigu A est mesuré depuis l'extérieur de la réhausse 2.

De cette manière, l'amorce de rupture formée par le sillon 3 permet de réaliser une découpe nette lors de l'application d'une force entrainant une rupture au niveau du sillon 3.

Selon les présents mode de réalisation, le sillon 3 présente plus généralement une section transversale en forme de V.

Le sillon 3 présente, selon une section transversale, une face supérieure 311 et une face inférieure 312.

A titre indicatif, et en référence à la figure 3, la forme en V du sillon 3 définit un triangle avec :
- une base b d'une longueur « lo » de 4 à 8 mm, et avantageusement de 6 mm, et
- une hauteur « h » de 15 à 30 mm, et avantageusement de 20 mm.

La figure 4 illustre schématiquement l'épaisseur de la paroi périphérique 21. Le sillon 3 produit une réduction en épaisseur de la paroi périphérique 21 au niveau de son fond 31.

Avantageusement, la paroi périphérique 21 présente, au niveau du fond 31 du sillon 3, une épaisseur réduite égale à environ 3/10^{ièmes} de l'épaisseur au niveau du pourtour du sillon 3.

A titre indicatif, la paroi périphérique 21 présente une épaisseur de 10 mm autour du sillon 3 et ainsi une épaisseur de 3 mm au niveau du fond 31 du sillon 3.

En référence aux figures 1 à 5, et selon les présents modes de réalisation, la paroi périphérique 21 de la réhausse 2 présente une corrugation annulaire 22 qui fait saillie à l'intérieur de la réhausse 2.

Le sillon 3 est alors situé dans un creux défini par la corrugation annulaire 22.

Selon le mode de réalisation illustré par la figure 3, le sillon 3 est décalé en dessous d'un plan médian PM de la corrugation annulaire 22.

Toujours selon ce mode de réalisation, la face inférieure 312 s'inscrit avantageusement dans un plan perpendiculaire à la hauteur selon laquelle s'étend la réhausse 2.

De cette manière, lors d'une rupture de la réhausse 2 au niveau du sillon 3, alors un bord net, s'étendant essentiellement perpendiculairement à la hauteur de la réhausse 2 se crée, dans la continuité, ou essentiellement dans la continuité, de la face inférieure 312.

En référence au mode de réalisation de la figure 5, le sillon 3 est centré dans la corrugation annulaire 22. La face supérieure 311 et la face inférieure 312 sont alors symétriques l'une de l'autre selon le plan médian partageant en deux la corrugation annulaire 22.

La corrugation annulaire 22 a également pour effet qu'un pan supérieur de cette corrugation annulaire 22 forme un bourrelet 211 situé au-dessus du sillon 3.

Ce bourrelet 211 peut être utilisé comme zone de frappe à impacter pour entraîner une rupture de la paroi périphérique 21 par l'amorce de rupture formée par le sillon 3.

Selon un mode de réalisation envisageable, le sillon 3 n'est ni situé dans une corrugation annulaire 22, ni surplombé par un bourrelet 211.

Selon un autre mode de réalisation envisageable, la corrugation annulaire 22 peut n'est pas présente, et seul un bourrelet 211 est alors situé au-dessus du sillon 3.

Grâce à la cuve 1 selon l'invention, une adaptation et un ajustement de la hauteur de la réhausse 2 est possible par le biais d'une ou de plusieurs frappes, par exemple à l'aide d'une masse, de la zone de frappe formée par le bourrelet 211 au-dessus du sillon 3.

Ceci est particulièrement simple à mettre en oeuvre sur le lieu d'installation d'une cuve 1 selon l'invention.

Cet ajustement de la hauteur de la réhausse 2 produit une rupture nette de la réhausse 2 tout le long du sillon 3.

Un tampon destiné à être utilisé pour refermer la réhausse 2 peut être posé sur le nouveau bord supérieur de la réhausse 2 suite à la rupture au niveau du sillon 3.

## Revendications

1. Cuve (1) pour la collecte et/ou le traitement d'eaux usées et d'eaux pluviales destinée à être enterrée, la cuve étant en matériau plastique et comprenant :
- des parois (10) délimitant un volume interne dont une paroi supérieure (11) ;
- une réhausse (2) comprenant une paroi périphérique (21) s'étendant en hauteur depuis la paroi supérieure (11) jusqu'à une ouverture (24), la réhausse (2) étant destinée à former un regard,
**caractérisé en ce que** la paroi périphérique (21) de la réhausse (2) présente une amorce de rupture formée par un sillon (3) ménagé dans l'épaisseur de la paroi périphérique (21), le sillon (3) s'étendant sur l'une des surfaces de la paroi périphérique (21) à une hauteur prédéterminée de la réhausse (2) depuis la paroi supérieure (11), le sillon (3) présentant un fond (31) avec une section transversale en forme en V.

2. Cuve (1) selon la revendication précédente, **caractérisée en ce que**, selon un plan transversal à la paroi périphérique (21), la paroi périphérique (21) présente au-dessus du sillon (3) un bourrelet (211) formant une zone de frappe pour entraîner une rupture de la paroi périphérique (21) par l'amorce de rupture.

3. Cuve (1) selon la revendication précédente, **caractérisée en ce que** la paroi périphérique (21) de la réhausse (2) présente une corrugation annulaire (22) faisant saillie à l'intérieur de la réhausse (2), le sillon (3) étant situé dans le creux de la corrugation annulaire (22), et un pan supérieur de la corrugation annulaire (22) formant le bourrelet (211).

4. Cuve (1) selon l'une quelconque des revendications précédentes, **caractérisée en ce que** la forme en V du fond (31) du sillon (3) définit un angle aigu.

5. Cuve (1) selon l'une quelconque des revendications précédentes, **caractérisée en ce qu'**au niveau du fond (31) du sillon (3), la paroi périphérique (21) présente une épaisseur égale à environ 3/10^{ièmes} de l'épaisseur moyenne de la paroi périphérique (21).

6. Cuve (1) selon l'une quelconque des revendications précédentes, **caractérisée en ce qu'**elle est rotomoulée.

7. Cuve (1) selon l'une quelconque des revendications précédentes, **caractérisée en ce que** le sillon (3) présente une section transversale en forme en V.

8. Cuve (1) selon l'une quelconque des revendications précédentes, **caractérisée en ce que** le sillon (3) est ininterrompu.

9. Cuve (1) selon l'une quelconque des revendications précédentes, **caractérisée en ce que** le sillon (3) est interrompu par au moins un renfort (4) à découper.

10. Moule de cuve (1) pour la collecte et/ou le traitement d'eaux usées destinée à être enterrée, le moule présentant une empreinte de cuve (1) selon l'une quelconque des revendications précédentes.

## Patentansprüche

1. Tank (1) zum Sammeln und/oder Aufbereiten von Abwasser und Regenwasser, der dazu bestimmt ist, unter der Erde zu sein, wobei der Tank aus Kunststoff besteht und Folgendes umfasst:
- Wände (10), die ein Innenvolumen begrenzen, darunter eine obere Wand (11);
- eine Erhöhung (2), die eine Umfangswand (21) umfasst, die sich in der Höhe von der oberen Wand (11) bis zu einer Öffnung (24) erstreckt, wobei die Erhöhung (2) dazu bestimmt ist, ein Mannloch zu bilden,
**dadurch gekennzeichnet, dass** die Umfangswand (21) der Erhöhung (2) eine Sollbruchstelle aufweist, die durch eine Rille (3) gebildet wird, die in der Dicke der Umfangswand (21) ausgebildet ist, wobei sich die Rille (3) über eine der Oberflächen der Umfangswand (21) in einer vorbestimmten Höhe der Erhöhung (2) von der oberen Wand (11) erstreckt, wobei die Rille (3) einen Boden (31) mit einem V-förmigen Querschnitt aufweist.

2. Tank (1) nach dem vorhergehenden Anspruch, **dadurch gekennzeichnet, dass** die Umfangswand (21) entlang einer Ebene quer zur Umfangswand (21) oberhalb der Rille (3) eine Verdickung (211) aufweist, die eine Schlagzone bildet, um durch die Sollbruchstelle einen Bruch der Umfangswand (21) zu bewirken.

3. Tank (1) nach dem vorhergehenden Anspruch, **dadurch gekennzeichnet, dass** die Umfangswand (21) der Erhöhung (2) eine ringförmige Wellung (22) aufweist, die in das Innere der Erhöhung (2) hineinragt, wobei sich die Rille (3) im Hohlraum der ringförmigen Wellung (22) befindet und ein oberer Teil der ringförmigen Wellung (22) die Verdickung (211) bildet.

4. Tank (1) nach einem der vorhergehenden Ansprüche, **dadurch gekennzeichnet, dass** die V-Form des Bodens (31) der Rille (3) einen spitzen Winkel definiert.

5. Tank (1) nach einem der vorhergehenden Ansprüche, **dadurch gekennzeichnet, dass** die Umfangswand (21) auf Höhe des Bodens (31) der Rille (3) eine Dicke von etwa 3/10 der durchschnittlichen Dicke der Umfangswand (21) aufweist.

6. Tank (1) nach einem der vorhergehenden Ansprüche, **dadurch gekennzeichnet, dass** er rotationsgeformt ist.

7. Tank (1) nach einem der vorhergehenden Ansprüche, **dadurch gekennzeichnet, dass** die Rille (3) einen V-förmigen Querschnitt aufweist.

8. Tank (1) nach einem der vorhergehenden Ansprüche, **dadurch gekennzeichnet, dass** die Rille (3) ununterbrochen ist.

9. Tank (1) nach einem der vorhergehenden Ansprüche, **dadurch gekennzeichnet, dass** die Rille (3) durch mindestens eine zu schneidende Verstärkung (4) unterbrochen ist.

10. Tankform (1) zum Sammeln und/oder Aufbereiten von Abwasser, die dazu bestimmt ist, unter der Erde zu sein, wobei die Form einen Tankformhohlraum (1) nach einem der vorhergehenden Ansprüche aufweist.

## Claims

1. A vessel (1) for the collection and/or treatment of wastewater and rainwater intended to be buried, the vessel being made of a plastic material and comprising:
- walls (10) delimiting an inner volume including an upper wall (11);
- a riser (2) comprising a peripheral wall (21) extending in height from the upper wall (11) up to an opening (24), the riser (2) being intended to form a manhole,
**characterised in that** the peripheral wall (21) of the riser (2) has a rupture initiator formed by a groove (3) formed in the thickness of the peripheral wall (21), the groove (3) extending over one of the surfaces of the peripheral wall (21) at a predetermined height of the riser (2) from the upper wall (11), the groove (3) having a bottom (31) with a V-like shaped cross-section.

2. The vessel (1) according to the preceding claim, **characterised in that**, according to a plane transverse to the peripheral wall (21), the peripheral wall (21) has above the groove (3) a bead (211) forming a striking area for causing a rupture of the peripheral wall (21) by the rupture initiator.

3. The vessel (1) according to the preceding claim, **characterised in that** the peripheral wall (21) of the riser (2) has an annular corrugation (22) projecting inside the riser (2), the groove (3) being located in the hollow of the annular corrugation (22), and an upper sidewall of the annular corrugation (22) forming the bead (211).

4. The vessel (1) according to any one of the preceding claims, **characterised in that** the V-like shape of the bottom (31) of the groove (3) defines an acute angle.

5. The vessel (1) according to any one of the preceding claims, **characterised in that** at the level of the bottom (31) of the groove (3), the peripheral wall (21) has a thickness equal to about 3/10th of the average thickness of the peripheral wall (21).

6. The vessel (1) according to any one of the preceding claims, **characterised in that** it is roto-moulded.

7. The vessel (1) according to any one of the preceding claims, **characterised in that** the groove (3) has a V-like shaped cross-section.

8. The vessel (1) according to any one of the preceding claims, **characterised in that** the groove (3) is uninterrupted.

9. The vessel (1) according to any one of the preceding claims, **characterised in that** the groove (3) is interrupted by at least one reinforcement (4) to be cut.

10. A mould of a vessel (1) for the collection and/or treatment of wastewater intended to be buried, the mould having a mould cavity of a vessel (1) according to any one of the preceding claims.
